# EUROPÄISCHE PATENTANMELDUNG

(11) **EP 2 365 106 A1**
(43) Veröffentlichungstag der Anmeldung: **14.09.2011**
(21) Anmeldenummer: 10002173.2
(22) Anmeldetag: 03.03.2010
(51) Int. Cl.: C23C 28/00, C23C 28/04

(54) **Keramische Wärmedämmschichtsystem mit modifizierter Anbindungsschicht**

(71) Anmelder: SIEMENS AKTIENGESELLSCHAFT, 80333 München (DE)
(72) Erfinder: Stamm, Werner, Dr., 45481 Mühlheim an der Ruhr (DE)

(57) **Zusammenfassung**

Durch eine modifizierte innere keramische Anbindungsschicht aus Zirkonoxid und Aluminiumoxid wird die Anbindung und die Lebensdauer eines keramischen Wärmedämmschichtsystems verbessert.

## Beschreibung

Die Erfindung betrifft ein keramisches Wärmedämmschichtsystem gemäß Anspruch 1.

Bauteile die bei hohen Temperaturen eingesetzt werden, wie z.B. Turbinenschaufel in Gasturbinen werden mit einem keramischen Wärmedämmschichtsystem versehen. Dabei wird eine äußere keramische Schicht auf ein Substrat aufgebracht, wobei oft noch eine metallische Anbindungsschicht und Oxidationsschutzschicht verwendet wird, die eine Aluminiumoxidschicht entwickelt.

Es gilt die Lebensdauer und die Anhaftung der keramischen Wärmedämmschicht an das Substrat weiterhin zu verbessern. Die Aufgabe wird gelöst durch ein keramisches Wärmedämmschichtsystem nach Anspruch 1.

In den Unteransprüchen sind weitere vorteilhafte Maßnahmen gezeigt, die beliebig miteinander kombiniert werden können, um weitere Vorteile zu erzielen.

Es zeigen:
- Figur 1, 2: Ausführungsbeispiele der Erfindung,
- Figur 3: eine Gasturbine,
- Figur 4: eine Turbinenschaufel,
- Figur 5: eine Brennkammer,
- Figur 6: eine Liste von Superlegierungen.

Die Figuren und die Beschreibung stellen nur Ausführungsbeispiele der Erfindung dar.

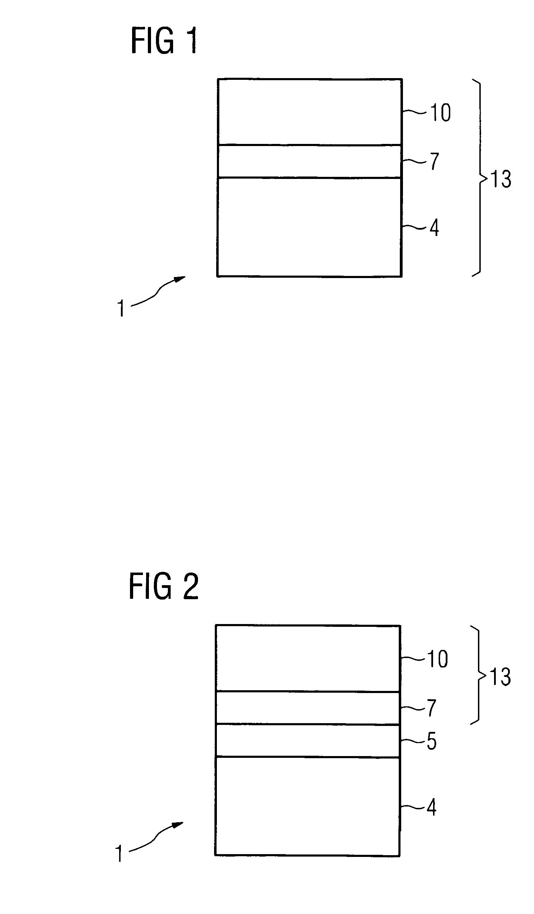

In Figur 1 ist ein erstes Ausführungsbeispiel der Erfindung gezeigt.

Das Bauteil 1 kann ein Bauteil einer Turbine, einer Gasturbine 100, aber auch einer Dampfturbine sein. Insbesondere ist es eine Turbinenschaufel 120, 130 oder ein Brennkammerelement 155.

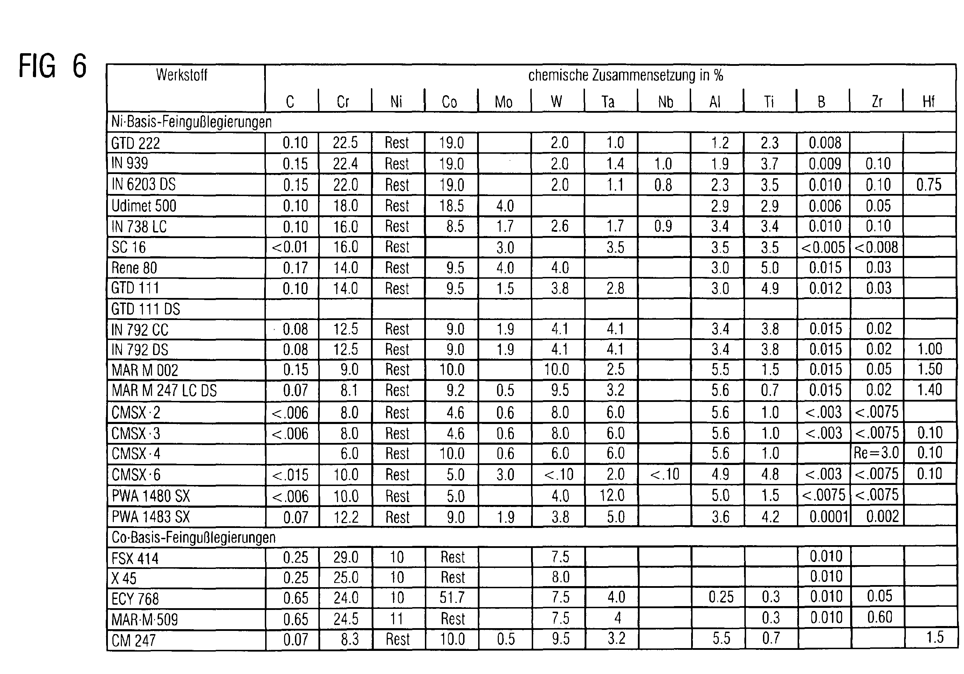

Das Bauteil 1 weist ein Substrat 4 auf, das insbesondere eine nickelbasierte Superlegierung, insbesondere eine Legierung der Figur 6 aufweist oder vorzugsweise daraus besteht.

Auf dem Substrat 4 ist eine vorzugsweise nur zweischichtige Wärmedämmschicht 13 aufgebracht.

Direkt auf dem Substrat 4 ist eine innere keramische Anbindungsschicht 7 oder innere keramische Schicht 7 aufgebracht, die Zirkonoxid und Aluminiumoxid aufweist und insbesondere daraus besteht.

Das Zirkonoxid ist vorzugsweise teilstabilisiert, insbesondere durch Yttriumoxid (Y₂O₃).

Die innere keramische Schicht 7 ist vorzugsweise nanostrukturiert ausgebildet. Nanostrukturiert bedeutet, dass mindestens 20%, insbesondere mindestens 80% aller Korngrößen kleiner gleich 500nm, insbesondere kleiner gleich (≤) 300nm sind.

Auf der inneren keramischen Schicht 7 ist eine äußere keramische Wärmedämmschicht 10 aufgebracht.

Die äußere Wärmedämmschicht 10 weist insbesondere Zirkonoxid, ganz insbesondere teilstabilisiertes Zirkonoxid auf.

Ebenso kann die äußere keramische Schicht 10 ein Pyrochlor aufweisen.

Der Aluminiumoxidanteil in der inneren keramischen Schicht 7 beträgt vorzugsweise mindestens 40vol%, ganz vorzugsweise mindestens 50vol%.

Die innere keramische Schicht 7 ist vorzugsweise dünner (insbesondere 10%) ausgebildet als die äußere keramische Schicht 10.

In Figur 2 ist ein weiteres Ausführungsbeispiel der Erfindung gezeigt.

Zusätzlich zu Figur 1 ist eine metallische Anbindungsschicht 5 direkt auf dem Substrat 4 vorhanden, auf dem dann die innere keramische Schicht 7, wie oben schon beschrieben, vorhanden ist.

Sowohl gemäß Figur 1 und 2 kann eine Aluminiumoxidschicht (thermisch gewachsene Oxidschicht TGO) unter der inneren keramischen Schicht 7 vorhanden sein.

Ebenso kann die äußere keramische Schicht (10) zweilagig, insbesondere nur zweilagig ausgebildet sein.

Durch die neue und verschiedene Zusammensetzung der keramischen Schichten ist eine bessere Anbindung zum Substrat 4 gegeben.

Durch diese zweischichtige Ausgestaltung wird die Oxidationsbeständigkeit und Lebensdauer erhöht.

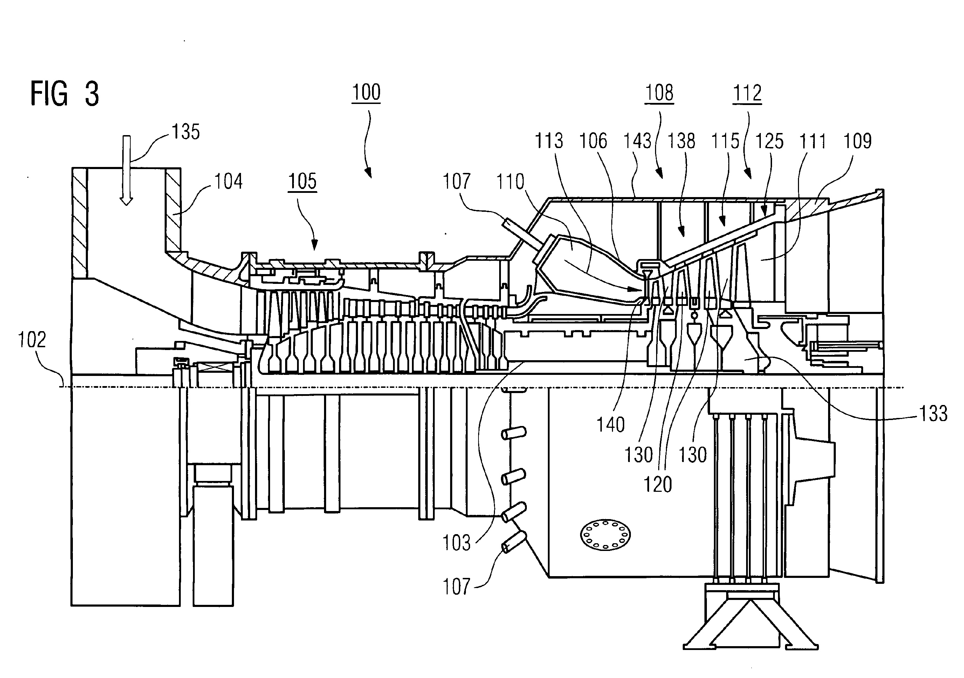

Die Figur 3 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

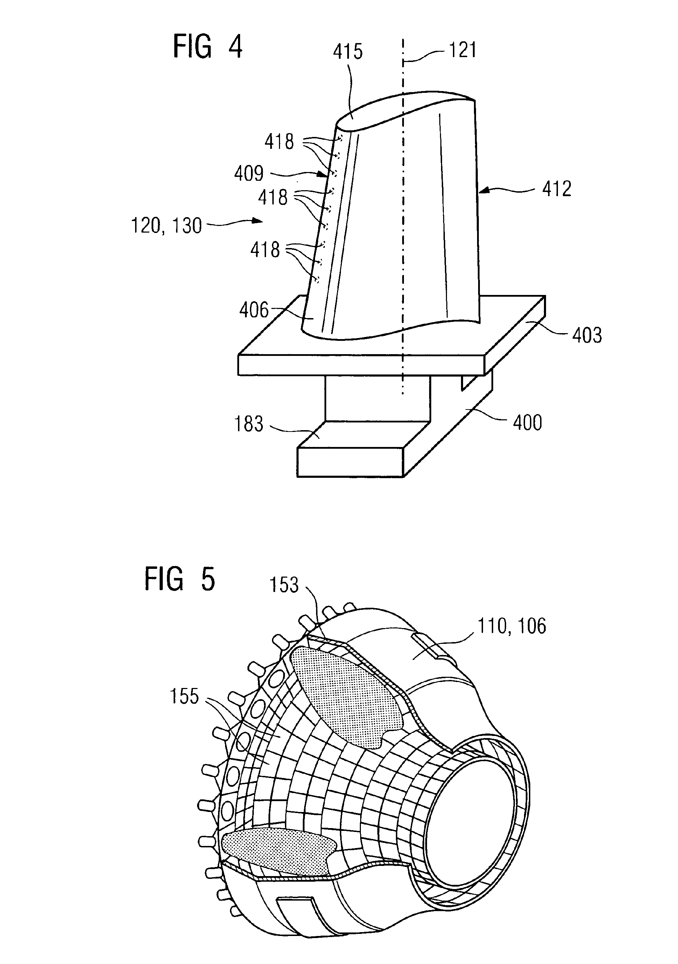

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Keramisches Wärmedämmschichtsystem (13),
aufweisend
ein Substrat (4),
optional eine metallische Haftschicht (5) auf dem Substrat, eine innere keramische Schicht (7) aus
Zirkonoxid und Aluminiumoxid
auf dem Substrat (4),
und eine äußere keramische Wärmedämmschicht (10) auf der inneren Schicht (7),
die (10) ein anderes Material aufweist als die innere keramische Schicht (7),
die insbesondere kein Aluminiumoxid aufweist.

2. Schichtsystem nach Anspruch 1,
bei dem die äußere keramische Schicht (10) Zirkonoxid, insbesondere teilstabilisiertes Zirkonoxid aufweist, insbesondere daraus besteht.

3. Schichtsystem nach Anspruch 1 oder 2,
bei dem die innere keramische Schicht (7) nur aus Aluminiumoxid und Zirkonoxid,
das vorzugsweise zumindest teilweise,
ganz insbesondere nur teilstabilisiert ist,
besteht.

4. Schichtsystem nach Anspruch 1, 2 oder 3,
bei dem der Aluminiumoxidanteil der inneren keramischen Schicht (7) mindestens 40vol% beträgt,
insbesondere mindestens 50vol% beträgt.

5. Schichtsystem nach Anspruch 1, 2, 3 oder 4,
bei dem die innere keramische Schicht (7) nanostrukturiert ausgebildet ist.

6. Schichtsystem nach Anspruch 1, 2, 3, 4 oder 5,
bei dem die äußere keramische Schicht (10) eine mindestens 10%, insbesondere 20% höhere Porosität als die innere keramische Schicht (7) aufweist.

7. Schichtsystem nach Anspruch 1, 2, 3, 4, 5 oder 6,
bei dem die äußere keramische Schicht (10) eine Pyrochlorstruktur aufweist.

8. Schichtsystem nach Anspruch 1, 2, 3, 4, 5, 6 oder 7, bei dem die innere keramische Schicht (7) und/oder die äußere keramische Schicht (10) plasmagespritzt sind.

9. Schichtsystem nach Anspruch 1, 2, 3, 4, 5, 6, 7 oder 8, bei dem die innere keramische Schicht (7) mindestens 10%, insbesondere mindestens 20% dünner ausgebildet ist als die äußere keramische Schicht (10).

10. Schichtsystem nach Anspruch 1, 2, 3, 4, 5, 6, 7, 8 oder 9,
deren keramische Schicht (13) nur aus einer inneren keramischen Schicht (7) und einer äußeren keramischen Schicht (10) besteht.

11. Schichtsystem nach einem oder mehreren der Ansprüche 1 bis 10,
bei dem der Aluminiumoxidanteil mindestens 10vol% beträgt.

12. Schichtsystem nach einem oder mehreren der Ansprüche 1 bis 11,
das aus Substrat (4), Haftschicht (5), innerer keramischer Schicht (7) und äußerer keramische Schicht (10) und optional einer thermisch gewachsenen Oxidschicht auf der Haftschicht (5) besteht.
